# EUROPEAN PATENT APPLICATION

(11) **EP 2 511 003 A1**
(43) Date of publication of application: **17.10.2012**
(21) Application number: 11002729.9
(22) Date of filing: 13.04.2011
(51) Int. Cl.: B01D 53/62, C04B 22/10

(54) **Environment friendly method for the production of cement**

(71) Applicant: Brück, Bartholomäus T., 51065 Köln (DE); Bohnen, Michael F., 24576 Bad Bramstedt (DE); Sood, Rajeev, Blackheath, SE 3 7DH (GB)
(72) Inventor: Brück, Bartholomäus T., 51065 Köln (DE); Bohnen, Michael F., 24576 Bad Bramstedt (DE); Sood, Rajeev, Blackheath, SE 3 7DH (GB)

(57) **Abstract**

A method for an environment-friendly process for the manufacture of CO2 absorbing cement is provided. In the process energy, heat and CO2 generated by a biorefinery unit is utilized. In addition the resulting cement product may be functionalised with biological modifiers comprised in the biorefinery waste streams. Thereby biorefinery waste products can be reduced further.The process results in a CO2 absorbing cement with enhanced properties due to the funcitionalisation with the biological modifiers from biorefinery waste streams.

## Description

The invention is in the field of sustainable methods of the production of cement and the functionalisation of CO₂ absorbing cement.

Anthropogenic CO₂ emissions, from combustions of fossils fuel resources such as petroleum and coal amount to 36 Gt CO₂/year and have been identified as a major contributor to global warming effects. Unless mankind accepts to face climate change on a massive and global scale at least 6 billion tons of CO₂ per annum have to be sequestered by innovative technologies.

Combustion and physicochemical transformation of fossil energy carriers, such as petroleum and coal for the generation of power, transportation fuels and man made goods, such as cement and base chemicals account for nearly 100% of anthropogenic CO₂ emissions. In order to combat global warming effects, alternative processes that do not rely on fossil energy carriers are being developed. Greenhouse gas (GHG) emissions from transportation fuels such as, petrol and diesel account for 26% of anthropogenic CO₂ emissions. In order to reduce the impact of human transportation needs on climate change, mandates for the production and use of biofuels, such as bioethanol and biodiesel and biogas have been implemented by industrialized G8 nations. Interestingly, biofuels and renewable platform chemicals, which substitute for petroleum based chemical equivalents can be manufactured from complex biomass feedstocks in so called biorefinery settings, which leads to significant CO₂ savings in the production of commodity goods.

Cement based building materials account for 70% of the total global material flow, which accounts to about 14 Bil. t of concrete being traded on a yearly basis. Due to outdated manufacturing processes, the cement industry is responsible for about 5% of global anthropogenic CO₂ emissions. Limestone calcination is the most energy intensive step in traditional Portland cement production, which requires intensive use of fossil energy carriers. It is therefore not surprising that the production of one metric ton cement results in a CO₂ release equivalent to 222kg carbon. To reduce the GHC emission footprint of cement manufacture strategies such as the use of low carbon fuels, CO₂ removal from flue process gases and the development of novel cement compositions have been studied.

Alternative alkaline earth metal carbonate based cement admixtures, which actually can be used for the active CO₂ adsorption, are known. These CO₂ absorbing cement compositions are distinguished from traditional portland cement by durability, Lower reactivity (less water, lower pH), reduced solubility of heavy metals (lower pH), density, impermeability and homogeneity, water bleeding, reactivity to environmental reagents such as salt and dimensional stability. While some of the differences to Portland cement are advantageous others constitute drawbacks.

Biorefineries combine physical, chemical and biotechnological methods to fractionate and transform complex biological raw materials such as, straw, wood, sugar beet and oil seed into commodity chemicals, transportation fuels and even consumer goods such as bioplastics. While these processes are very energy and materials efficient thereby improving the GHG emission profile of commodity goods, they also produce low or no- value product side streams (i.e. lignin rich waste, degumming residue, glycerol or fermentation slop), which can only be burned to generate process energy or they have to be disposed by alternative strategies. As these biorefinery "waste" streams often contain high water content, their disposal is associated with energy intensive work up procedures, thereby negatively influencing the GHG footprint of the entire biorefining process. Innovative disposal strategies that could even add value to these "waste streams" have to be developed.

US3398005 describes that traditional Portland cement mixtures may be functionalized by carbonate minerals, porzellaens and other components, such as organic compounds like cellulose and ligninsulphonates, that influence the physical properties of the cement, which enables its adaptation to various building applications.

US7722850, US20091202410 and US2010/135882 describe the sequestration of CO₂ by reaction with magnesium silicate minerals.

US4838941 describes cement based on magnesium silicate minerals

US7771684, US20101230830 and W02010/039903 describe the production of CO₂ absorbing cement on the basis of magnesium silicate minerals and are hereby incorporated by reference.

Even though recently developed methods of the production of CO₂ absorbing cements already constitute a major improvement in the provision of environment friendly building materials, the method of production may still be improved towards a better utilization of resources to further reduce the GHG footprint of cement production.

It is therefore an objective of the invention to provide a method for the production of CO₂ absorbing cement in which the necessary resources are provided by as few sources as possible.

It is a further objective of the invention to reduce waste streams of biorefineries and power plants.

Is it yet a further objective of the invention to provide a process for the manufacture of CO₂ absorbing cement in which the CO₂ for the manufacturing process does not need a purification step for the CO₂ to be used and which provides CO₂ absorbing cement which is low or free of toxic or carcinogenic substances.

It is yet a further objective of the invention to provide CO₂ absorbing cement with improved properties which maintains or improves the advantages of CO₂ absorbing cement in comparison to Portland cement and which alleviates or reduces the drawbacks. The object is also to provide a method of manufacture for such a CO₂ absorbing cement The objectives are achieved by a method according to claim 1 and a product according to claim 16.

The objectives are further achieved by preferred embodiments according to the dependent claims.

In particular the problem of the invention is solved by a method for the production of cement utilising by-products generated by a biorefinery unit comprising the following steps
Step 1 Mechanical grinding of a feedstock comprising one or more CO₂ sequestering compounds;
Step 2: Heating the ground feed stock resulting from step 1 to a temperature of 200 to 600°C
Step 3: Carbonation of the material resulting from step 2 under addition of gaseous CO₂
Step 4: Drying of the mineral carbonates resulting from step 3
wherein the energy used for step 1 and/or the heat used for step 2 is provided by the biorefinery unit or by a power plant utilizing a product provided by the biorefinery unit and/or wherein the CO₂ used for step 3 is provided by the biorefinery unit.

Thereby all necessary resources, next to the cement feedstock, in form of energy, heat and CO₂ may be provided from a biorefinery unit. Ideally all the energy, heat and the CO₂ are provided by one and the same biorefinery unit. Thereby logistics related to the provision of resources can be simplified and the utilisation of by products of the energy generation can be maximised.

In addition to the provision of CO₂ by a biorefinery unit additional CO₂ for the carbonation of the cement may be sequestered from environmental air during the manufacturing process or thereafter.

The method can be further improved by functionalizing the resulting plain dry cement with biological modifiers thereby improving the cements properties. The so functionalized CO₂ absorbing cement shows enhanced properties in comparison to non-functionalized CO₂ absorbing cement known from prior art. In particular the properties of CO₂ absorbing cement are improved by functionalization with one or more biological modifiers selected from the group of lignin, furfural and phosphorus rich residues or any mixture thereof. In a preferred embodiment the biological modifiers are provided in form of biorefinery waste streams, thereby further reducing industrial by-products which would need to be disposed of otherwise. Ideally the biorefinery waste streams are provided by the same biorefinery unit providing energy, heat and/or CO₂.

The high water content of these biorefinery waste streams can be a desired feature in cement production as it reduces the need for process water.

In a preferred embodiment of this invention the CO₂ sources for the manufacture of CO₂ absorbing cement compositions are derived from fermentative process steps present in biorefineries, which may encompass but are not limited to biogas production, alcoholic fermentation or any other kind of CO₂ producing fermentation or energy production process. In contrast to fossil fuel derived CO₂ sources, these biological CO₂ sources do not require physicochemical conditioning of the CO₂ source prior to utilization in the cement production process.

In another preferred embodiment the CO₂ absorbing cement is further functionalized by other physical or chemical modifiers or fillers which do not stem from biorefinery waste streams such as for example pozzolans, alkyl-epoxides, rubber, fly ash.

The functionalized cement product which is obtainable from afore mentioned manufacturing process is also an aspect of the invention. Such a functionalized cement product comprises the main products of the carbonation reaction comprising SiO₂ and MgCO₃, as well as residues of unreacted feedstock. The product furthermore comprises one or more biological modifiers selected from the group of lignin, furfural and phosphorus rich residues or any mixture thereof. In addition the funtionalized cement product may comprise further ingredients among them further physical and chemical modifiers, fillers or admixtures of other cement products.

The terms used in the description of the invention are defined as follows.

The term biomass refers to any complex biogenic substrate, which can be fractionated into its chemical component fractions and transformed into other products. Non-limiting examples are wood, cereal straw, weeds, grass, plant oil, seeds, potato, sugar beet and sugar cane.

The term lignocellulosic biomass refers to any complex biogenic substrate, which contains lignin and cellulose. Non-limiting examples are wood, cereal straw, cotton stalks, sugar cane bagasse.

The term biorefinery refers to any set of chemical, physical, biochemical, biological and biotechnological processes that can fractionate biomass and transform the resulting fractions into value adding commodity products such as biofuels, bioenergy, chemicals, polymers, food/feed additives and pharmaceuticals.

The term carbohydrate refers to any monomeric, oligomeric or polymeric carbohydrate. Non limiting examples include cellulose, xylan, arabinan, mannan, pectin, glucose, arabinose, xylan, galactose, mannose, galacturonic acid.

The term furfural-rich refers to any solid or liquid biorefinery product, waste or intermediate stream, that has undergone hydrothermal treatment in the absence or presence of acid and where pentose and/or hexose sugars have been dehydrated to form furfural (Furan-2-aldehyd) and/or 5-hydrolymethylfurfural.

The term hexose refers to any uncharged polymeric or monomeric carbohydrate with a six carbon skeleton. Non limiting examples are cellulose,mannan, galactan, galactose, glucose and mannose.

The term lignin (General formula: C₉H₁₀O₂, C₁₀H₁₂O₃, C₁₁H₁₄O₄)- rich refers to biomass or biomass fractions enriched in polymeric phenylpropanoids, which contain varying degrees of the monolignols p-coumaryl alcohol, coniferyl alcohol, and sinapyl alcohol.

The term pentose refers to any polymeric or monomeric carbohydrate with a five carbon skeleton. Non limiting examples are xylose, xlyan, arabinose, arabinan.

The term phospholipid refers to any glyceride containing a phosphate group and an organic residue such as choline.

The term polymeric carbohydrates refers to any homomeric or heteromeric pentose and/or hexose based polymer. Non-limiting examples are cellulose, arabinan, xylan, galactan, mannan and chitin.

The term microbial cell residue refers to any untreated and inactivated microbial biomass resulting from fermentation processes. Non-limiting examples are cell residues of yeasts, bacteria, algae, and filamentous fungi.

The term soluble phenolics refers to any soluble degradation products of lignin, which contain the either free and methoxylated forms of the monolignol: p-coumaryl alcohol, coniferyl alcohol, and sinapyl alcohol.
Figure 1 shows a process for the production of CO₂ absorbing cement according to an embodiment of the invention in which the biorefinery unit is based on the processing of lignocellulose materials.
Figure 2 shows a process for the production of CO₂ absorbing cement according to an embodiment of the invention in which the biorefinery unit is based on the processing of lipid materials.

In the following several ways of practicing the invention and preferred embodiments of the invention are described in a non-limiting manner.

The invention relates to production of CO₂ absorbing cement compositions from a feedstock comprising one or more CO₂ sequestering compounds. In a preferred embodiment such CO₂ sequestering compounds are based on alkaline earth metal carbonates and hydroxides In a preferred embodiment of this invention either serpentine, olivine, brucite, pyroxene and magnesiumoxide are utilized as alkaline earth metal donors for the production alkaline earth derived carbonates, the most preferred materials being serpentine and/or olivine, This basic method for the manufacture of CO₂ absorbing cement is known to the skilled person The utilization of serpentine is advantageous for an industrial production of CO₂ absorbing cement bodies due to the natural availability of serpentine and olivine in nature and hence its low production cost.

The serpentine reaction: Mg₃S₁₂O₅(OH)₄+ 3CO₂→ 3 MgCO₃ + 2 SiO₂+2 H₂O

The olivine reaction: Mg₂SiO₄ + 2 CO₂→ 2 MgCO₃ + SiO₂

One significant feature of alkaline earth mineral carbonation is the thermodynamic stability of the resulting carbonates. This stability enables a safe and permanent storage of the Greenhouse gas CO₂ in a solid form over geological time periods.

The unit operations for the manufacture of CO₂ absorbing cement compositions comprise, mineral (i.e. Serpentine, Olivine, Brucite, Pyroxene, Magnesiumoxide) mining, mechanical grinding, heating the ground mineral mass at higher temperatures, carbonation and finally precipitation and drying of the resulting mineral carbonates to formulate a plain CO₂ absorbing cement product.

Especially, grinding, heating and carbonation unit operations require a significant energy and heat input, which is commonly is supplied by conventional fossil fuel power plants which may also supply CO₂ to the production process of the cement.

According to an embodiment of the invention both CO₂ generated by a biorefinery unit as well as heat and process energy generated by direct or indirect (via a biogas intermediate) burning of biorefinery residues, is supplied to unit operation in cement manufacture. As the heat and energy generation from biomass residues is CO₂ neutral, a significant reduction in the greenhouse gas foot print for CO₂ absorbing cement manufacture is achieved. For example in lignocelluloses based biorefinery settings low value side streams such as lignin rich residues are commonly burned to produce CO₂ neutral heat and process energy

An alternative to direct burning of low value biorefinery residues is their utilization as feedstocks for the production of biogas lignin (lignocellulose saccharification residue), phospholipid (plant oil degumming) or microbial cell residue (fermentation slop) rich waste streams resulting from lignocellulose (i.e. lignocellulose based ethanol production), lipid (i.e. plant oil based biodiesel production) and starch (i.e. wheat based bioethanol production) based biorefinery operations are commonly utilized in biogas operations. The biogas product can subsequently be burned in a power plant to produce heat and process energy. In contrast to the provision of CO₂ as flue gases from fossil fuel power plants, cement factories or petroleum refineries as known from prior art in a preferred embodiment of this invention the CO₂ sources for the manufacture of CO₂ absorbing cement compositions are derived from fermentative process steps present in biorefineries, which may encompass but are not limited to biogas production, alcoholic fermentation or any other kind of CO₂ producing fermentation or energy production process. In specific case of biogas derived CO₂, the anaerobic fermentation process results in a gas mixture of CO₂ and methane. The separation of these gaseous components can be achieved by adsorption processes, centrifugation technologies known to the skilled person (US 2009/0211441). While the purified CO₂ is utilized in carbonation processes for CO2 absorbing cements, the methane will be burned in a gas power plant to generate process energy for biorefinery and cement production unit operations. Alternatively the biogas mixture of methane and CO₂ is burned and CO₂ evolving from the biogas based power plant will be utilized in cement manufacture.

In contrast to fossil fuel derived CO₂ sources, these biological CO₂ sources lack unfavourable contaminants such as mercury, NOx or volatile organic carbon, which may negatively influence the properties of the resulting cement composition. The use of biological CO₂ sources therefore eliminates the need of physicochemical conditioning of the CO₂ source prior to utilization in the cement production process.

In a preferred embodiment of this invention the plain CO₂ absorbing cement composition is prepared in a dried (burned) powder form prior to addition of functionalizing additives. The plain cement CO₂ absorbing cement composition as detailed in this invention may also be referred to CO₂ absorbing cement clinker.

Commonly the plain CO₂ absorbing cement composition (powder) is mixed with water and other additives to obtain a fluid cement slurry, which can be cast into defined shapes particular to the desired building application, A common example is the casting of cement slurries into square blocks for later use a breeze (see Fig. 3) or building blocks.

In one embodiment of this invention either the CO₂ absorbing cement compositions and/or their functionalized congeners are mixed with water to create a fluid slurry, which can be cast into any shape, which later sets into a solid form, preferably for use as breeze blocks, walls, floorbases and plaster.

The preparation of the cement slurry requires mixing of the dry cement power (with or without additives) with a defined volume of water.

In one embodiment of this invention the preparation of castable cement slurries requires water (liquid) to dry cement powder w/w mixing ratios in the order of 0.01-0.7, more preferably 0.2-0.6 and even more preferably 0.3-0.5. The actual amount of process water that needs to be added to the cement powder may be reduced if the functionalizing additives contain a certain amount of water, which has to be considered in the desired mixing regimes. The addition of large volumes of water will result in rather fluid slurries, which results in an increased curing time that retards the formation of a solid mass that can be used for building materials.

In one embodiment of this invention the cement curing time, physical strength, corrosion and hydraulic properties of the cement slurry can significantly be influenced by biogenic and non-biogenic additives derived i.e. from biorefinery activities.

In this invention it was surprisingly found that untreated, minimally processed and/or dewatered biorefinery waste streams can modulate the physical properties of CO₂ absorbing cement compositions based on the serpentine reaction, thereby modulating curing (settling) time, porosity, water retention, plasticity, high physical strength and hydraulic properties. In a preferred embodiment of the invention the biorefinery waste streams are not modified by additional processes, i.e. they are untreated.

In a preferred embodiment of this invention low or no value biorefinery waste streams that positively affect the physical properties of CO₂ absorbing cement composition are:
1.) Lignin and/or furfural rich residues derived from processing of lignocellulosic materials. While Furfural rich residues are obtained after the thermolytic or hydrothermolytic pretreatment of lignocellulose in ethanol production (Yang, B. Wyman, C.E. (2009) Dilute acid and autolysis pretreatment in Mielenz, J.R. (ed), Biofuels: Methods and Protocols, Methods in Molceular Biology, Vol. 581 pp., 103-114), lignin rich residue is obtained after subsequent acid or enzymatic saccharification step in the same process (Bioethanol Production via Enzymatic Hydrolysis of Cellulosic Biomass (2008) Bioethanol Production via Enzymatic Hydrolysis of Cellulosic Biomass. J.Sci. and Ind. Res. 67, pp. 874-888).

In a preferred embodiment of this invention the lignin rich residues are free of sulphates and sulphonated lignin components as they complicate the functionalisation of cement compositions.
2.) Solid and optionally heat deactivated digestate residues derived from biogas production activities, which are enriched in native lignin and polymeric carbohydrates such as cellulose.
3.) Degumming residues rich in phospholipds obtained during the processing of natural (triglyceride) based oils.

As the chemical composition of biogenic waste streams resulting from biorefinery processes vary with processing conditions and the chemical nature of the biogenic feedstocks, they may have significantly variation in their chemical composition, which may have either positive or negative effects on their applicability to modulate the desired cement property. The actual chemical composition of the biogenic waste streams may be analysed according to standard analytica4 procedures
(http://www.nrel.gov/biomass/analytical_procedures.html, Clin.Chem. (1991) 37, pp, 868-74).

The general range of the chemical composition of the biogenic cement modifiers employed in this invention are detailed below:
1.) Lignin: rich residue:
   Lignin: 1-100% w/w
   Carbohydrate: 0-50% w/w
   Water: 0-80 % w/w
   Soluble Phenolics: 0-30% w/w
   Wax: 0-10%wlw
2.) Furfural rich residue:
   Pentose sugars: 1-70% w/w
   Hexose sugars: 0-20% w/w
   Furfural: 0-80% w/w
   5-hydroxymethylfurfural: 0-50% w/w (need to polymerize this to stabilize cement composition!)
   Phenolics: 0-30% w/w
   Water: 0-80 % w/w
3.) Phosphorus rich degumming residue:
   Phospholipids: 10-99% w/w
   Lipids: 0-35% w/w
   Carbohydrates- 0-99% w/w
   Proteins: 0-30 % w/w
   Water: 0-80% w/w
4.) Solid Biogas digestate:
   Lignin: 10-99% w/w
   Microbial cell residues: 1-50% w/w
   Carbohydrate: 0-90% w/w
   Water: 0-90% w/w
5.) Cell-rich residues:
   Microbial cell residues: 1-99% w/w
   Carbohydrate: 0-40% w/w
   Water: 0-90% w/w

In preferred practice of this invention the above biogenic components used for cement functionalizing will be used in an untreated, minimally treated and/or dewatered form. Preferred work up procedures for biogenic waste streams include 1-2 water or organic solvent washing cycles of solid residues, wherein the water volumes applied for washing are 0-1000 times the volume of the solid residue to be processed. Preferred organic washing agents include primary alcohols, i.e. methanol, ethanol, butanol or their corresponding ethers. In another preferred embodiment of the invention the washing solution may comprise any volumetric mixture between water and any of the listed organic washing agents. The washing cycles may be required to remove soluble sugars and phenolic compounds, which may negatively affect compression strength and settling time of the final cement composition.

Generally the high water content of biorefinery waste streams is a desired feature in cement production as it reduces the need for process water. However, in cases where the waste stream does not contain a desired concentration of the target component (i.e. lignin), the water content has to be reduced prior to application in cement manufacture. Therefore, in a preferred practice of the invention the utilized waste stream of the biorefinery unit is only modified by dewatering. Thereby the solid components of the biogenic waste streams may be enriched, for example by standard centrifugation or filtration processes.

In one embodiment of the invention the particle size of lignin rich residues and of biogas digestate solid fractions are reduced by mechanical milling to particles between 0.01-2cm, more preferably, 0.1-1cm and even more preferably 0.1-0.5 cm in size for application in cement functionalization.

In a particular embodiment of this invention furfural containing waste streams (http://www.worldbiofuelsmarkets.com/downloadslpresentations/8iorefineries _15th/Hans_R eith.pdf) resulting from hydrothermal or thermochemical mobilization (US4916242) of pentose derived from lignocelluloses feedstocks (Fuel (2010) 89, pp. 2873-2880), are concentrated to further enrich furfural components through evaporation techniques that reduce the water content. Non- limiting examples of evaporation techniques are vacuum distillation, gas stripping (US 4155804) under reduced pressures and simple heating of the water phase.

Addition of Lignocellulose may increase physical strength and reduced water requirements of cement made from plain dry cement

Lignin sulphonates, a waste stream from pulp and paper manufacture, have been documented to increase the binding capacity of portland cement compositions. In this invention it has surprisingly been found that non-sulphonated lignin residues act as an excellent binding accelerator in the production of CO₂ absorbing cement compositions. Lignin rich waste streams are the solid fraction left after chemical or enzymatic saccharification of lignocellulosic biomass (Bioresour Technol. (2010) 101, pp. 5023-32, Biotechnol Adv. (2010) 28, pp.541-2; Proc Natl Acad Sci U S A. (2010) 107, pp.4516-21). As the actual chemical composition of biorefinery residues will vary with feedstock, process conditions and work up conditions, the concentrations of residues that have to be added to improve the physical characteristics of the cement composition will always be referenced with respect to the total lignin concentration.

In a preferred embodiment of this invention the lignocellulosic waste stream is produced by hydrothermal pretreatment (i.e. in the absence of acid or base catalysts) of a lignocellulosic feedstocks (i.e. wood, straw) combined with subsequent enzyme (i.e. Cellulase) hydrolysis (solubilisation) of carbohydrate components within a biorefinery setting or a cellulosic ethanol plant. The solid lingocellulosic waste stream is then separated from the carbohydrate rich supernatant by centrifugation, filtration or any other physical methods for solid- liquid separation.

In a preferred practice of this invention, the resulting lignocellulosic waste stream is then analysed for soluble carbohydrates, phenolics and insoluble lignin prior to further processing. Ideally the native lignin rich waste stream should contain less than 10% w/w dry weight and more preferably less than 5% w/w dry weight soluble sugars and phenolics. In cases where these specifications are not met, appropriate washing cycles may be implemented to reduce the soluble fraction below the required limits.

For exact dosing of the lignin rich residue in CO₂ absorbing cement compositions, the mass % in each dosing regime are referenced solely to the lignin fraction of the of the total residue mass.

In a particular embodiment of the invention a modified CO₂ absorbing cement composition with an increase in physical strength and air entrainment, a reduction in water use and a negligible reduction in curing (setting) time compared to the plain cement composition is accomplished by addition of 0.001-10% lignin residues w/w cement dry solids.

More preferably the CO₂ absorbing cement composition with increased physical strength settling time and reduced water requirements contains 0.01-1 % lignin residues w/w cement dry solids and even more preferably 0.1-2% lignin residues w/w cement dry solids.

In yet another preferred embodiment of the invention the lignin rich residue fraction added to the cement composition is laced with 0.01-35% w alkylepoxide/ w lignin residue dry solids, in cases where the lignin rich residue contains more than 5% w/w soluble carbohydrates and phenolics. More preferably the lignin rich residue fraction added to the cement composition is laced with 0.1-6% w alkylepoxide/ w lignin residue dry solids.

In yet another preferred embodiment of the invention the lignin rich residue fraction added to the cement composition is laced with 0.01-35% w natural rubber, poly-vinyl-acetate, styrene-butyl-acrylate, butyl-acrylate-methyl-acrylate, styrene-butadiene or butadiene polymers/ w lignin residue dry solids. More preferably the lignin rich residue fraction added to the cement composition is laced with 0.1-3% w natural rubber or butadiene polymers/ w lignin residue dry solids. The addition of these polymers provides for a higher early strength and for an initial reduction in setting time.

The compressive strength of the resulting cement product is increased 0.01-10 times compared to the plain product. In a further aspect of the invention the air entrainment of the modified product is increased 0.1-16 fold over the plain product.

The addition of organic phosphates from phosphorous rich residues may increase physical strength, high porosity, plasticity, air entrainment and reduced curing times and corrosional resistance of cement made from plain dry cement.

Inorganic phosphorous salts are a known binding and hardening accelerators in CO₂ absorbing cement compositions (Zhurmal Prikladnoi Khimii (2006) 79, pp. 529-532). In this invention it was surprisingly found that organic phosphates serve as excellent binding accelerators. Phosphorolated biomass residues result from degumming processes of edible or other natural oils (http://www.srsbiodiesel.com/Degumming.aspx; http://ddr.nal.usda.gov/bitstream/10113/28430/1/CAIN789045047.pdf). In a non-limiting practice of this Invention concentration and dewatering can be achieved by centrifugation and simple gravitational setting of the degumming waste streams.

In a preferred practice of this invention the phosphorous rich additive dosing will solely refer to the phospholipid fraction of the degumming residues used as additives in cement compositions.

In one embodiment of this invention, the phosphorous residues are added in a concentration of 0-40% w/w dry weight plain cement, more preferably the phosphorous residues are added in a concentration of 6-15%w/w and even more preferably 10-14% w/w to the dry cementous composition thereby resulting in higher water resistance, reduced corrosiveness and higher compressive strength.

In particular instances where the phosphorous rich residue contains more than 5% soluble carbohydrates, neutral lipids or proteins, the cement composition is additional laced with 0.01-35% w natural rubber, poly-vinyl-acetate, styrene-butyl-acrylate, butyl-acrylate-methyl-acrylate, styrene-butadiene or butadiene polymers/ w lignin residue dry solids. More preferably the phosphorous rich residue fraction added to the cement composition is laced with 0.1-3% w natural rubber or butadiene polymers/ w lignin residue dry solids. The addition of these polymers provides for a higher early strength and for an initial reduction in setting time.

In yet another preferred embodiment of the invention phosphorous rich residues may be intermixed with lignin rich residues if these contain more than 2% w/w soluble sugars, phenolics, organic or inorganic sulphates. In order to obtain the desired decrease in cement curing times or an increase in compressional strength, corrosional resistance phosphorous rich residues may be intermixed with lignin rich residues at mass ratios of 0-70%w/w, more preferably 4-60% w/w and even more preferably 10-35% w/w with respect to lignin and phospholipids components in these residues respectively.

In a most preferred embodiment of this invention the intermixed functionalisation agent containing both phosphorous and lignin rich waste streams may be laced with 0-45%w/w any other natural or non natural additives as defined in this invention to obtain the desired reduction in curing time and/or increase in air entrainment and compressional strength. The addition of biogas digestate may increase physical strength, high porosity, plasticity of cement made from plain dry cement

In a preferred embodiment of this invention solid biogas digestates from biorefinery processes or biogas plants are used to increase the physical strength of CO₂ absorbing cement compositions.

Solid biogas digestate is the non-fermentable residue of a biogas process (http://air.unimi.it/bitstream/2434/50234/1/WhatlsTheDigestate.pdf, http://www.iea-biogas.net/Dokumente/Task37_Digestate_brochure9-2010.pdf). Depending on the feedstocks entering the process and the individual process parameters, these solid residues can be enriched in both lignin- and polymeric carbohydrates such as cellulose, In order to adjust the dosing of these biomass residues in the functionalizing CO₂ absorbing cement compositions, the chemical composition needs to be determined. Therefore, in a preferred practice of the invention the solid biogas residue biogenic waste is analysed for soluble and insoluble carbohydrates (i.e. cellulose), soluble phenolics and insoluble lignin prior to further processing.

According to a preferred embodiment of this invention the solid biogas digestate should contain less than 10%w/w dry weight and more preferably less than 5% w/w dry weight soluble sugars and phenolics. In cases where these specifications are not met, 1-2 water washing cycles according to the methods detailed in this invention have to be implemented to reduce the soluble fraction below the required limits.

For exact dosing of the solid biogas digestate in CO₂ absorbing cement compositions, the mass % in each dosing regime only are referenced solely to the lignin fraction of the of the total residue mass.

In a particular embodiment of the invention a modified cement composition with an increase in physical strength, a reduction in water use and a negligible reduction in setting time compared to the plain cement composition is accomplished by addition of 0.001-10% solid biogas digestate w/w cement dry solids.

More preferably the CO₂ absorbing cement composition with increased physical strength settling time and reduced water requirements contains 0.01-3% solid biogas digestate w/w cement dry solids and even more preferably 0.1-2% solid biogas digestate w/w cement dry solids.

In yet another preferred embodiment of the invention the lignin rich residue fraction added to the cement composition is laced with 0.01-35% w alkylepoxide/ w solid biogas digestate dry solids, in cases where the solid biogas digestate contains more than 5% w/w soluble carbohydrates and phenolics. More preferably the solid biogas digestate added to the cement composition is laced with 0.1-6% w alkylepoxide/ w solid biogas digestate dry solids. In yet another preferred embodiment of the invention the solid biogas digestate added to the cement composition is laced with 0.01-35% w natural rubber, poly-vinyl-acetate, styrene-butyl-acrylate, butyl-acrylate-methyl-acrylate, styrene-butadiene or butadiene polymers/ w solid biogas digestate dry solids. More preferably the solid biogas digestate added to the cement composition is laced with 0.1-3% w natural rubber or butadiene polymers/ w lignin residue dry solids. The addition of these polymers provides for a higher early strength and for an initial reduction in setting time.

The compressive strength of the resulting cement product is increased 0,01-10 times compared to the plain product. In a further aspect of the invention the air entrainment of the modified product is increased 0.1-30 fold over the plain product. In another aspect of the invention the curing time is reduced 2-10 fold, more preferably 2-5 fold and even more preferably 2-3 fold over the plain cement composition.

The addition of furfural may increase physical strength, high porosity, plasticity and air entrainment of cement made from plain dry cement

In a preferred embodiment of this invention furfural rich waste streams from biorefinery processes or cellulosic ethanol plants are used to increase the physical strength of CO₂ absorbing cement compositions.

Hydrothermal pretreatment processes in the absence or presence of acid or base catalysts are used in biorefinery processes to enhance downstream saccharification processes of lignocellulosic feedstocks (Biores.Technol. (2000) 74, pp.25-33; Methods Mol. Biol. (2009) 581, pp. 93-102; Biores. Technol. (2009), pp. 10-18; Biores.Technol. (2009), 100, pp. 3948-3962, Biores. Technol. (2005) 96, pp. 673-686; lnt.J-Mol.Sci. (2008), 9, pp. 1621-1651). These hydrothermal processes are commonly carried out at elevated temperatures between 100- 260°C and result in the solubilisation the pentose and partially of the lignin fraction of the respective lignocellulosic feedstocks (Biotech. Bioeng. (1983) 25, pp. 3149-3161). With increasing temperatures and acid concentrations in the pretreatment process the mobilized pentose is further converted into furfural (Biores.Technol. (2000) 74, pp.25-33, US 4897497). The aqueous solutions obtained after physicochemical pretreatment steps of lignocelluloses often contain minor concentrations of furfural (∼0.5-30% w/v) and residual pentose.

In one embodiment of this invention the furfural containing pretreatment solution can either be used in its native form for the fictionalization of CO₂ absorbing cement compositions or it can optionally be treated to obtain a furfural enriched fraction prior to utilization in cement manufacture.

To obtain a furfural enriched solution non limiting examples of enrichment procedures include heating the solution above 150-250°C for 0.01-100h in the absence or presence of 0.1-10M mineral acid (i.e. H₂SO₄, HCl, H₂NO₃), which quantitatively converts all remaining pentose into furfural (Biores. Technol. (1998) 66, pp 189-193). Alternatively furfural can also be selectively removed from the aqueous phase via vacuum distillation, selective adsorption or other physicochemical means to obtain a furfural rich liquid residue (US3531463, Ind. Eng. Chem. Anal. Ed., 1940,12 (12), pp 721-722, Sep. Sci. Technol. (2008) 43, pp. 2090 - 2102).

Several additional supplements and functionalisation agents may be used in CO₂ absorbing cement compositions to improve various properties

Due to the natural and process dependent variations in biorefinery residues, the addition of other natural or non-natural cement modifiers may be necessary to achieve the desired hydrolytic cement properties.

In the processes disclosed in this invention natural and non-natural cement additives that may be mixed with biogenic waste streams are defined as: alkyl or haloalkylepoxides, natural rubber, guayule, wood resin, methyl or ethyl cellulose, Avicel, polymeric isoprene, synthetic rubber, poly-vinyl-acetate, styrene-butyl-acrylate, butyl-acrylate-methyl-acrylate, styrene-butadiene or butadiene polymers.

The reaction products of biorefinery wastes and above natural and non-natural additives may be added to the cement compositions during or after its manufacture or to motar or concrete mixtures.

It is a preferred practice of the invention to intermix the additive mixtures to the cement compositions during the manufacturing process if the admixtures are supplied in a dried form.

In another preferred practice of the invention high water containing biorefinery residues are mixed with other natural or non-natural additives in desired concentrations and may be supplied as a defined suspension additives just prior to preparation of the concrete slurry in the field.

In yet another preferred practice of the invention an alkaline (Li, Na, K, Rb, Cs, Fr) or alkaline earth metal (i.e. Be, Mg, Ca, Sr, Ba, Ra) salt may be added as a hardening accelerator in concentrations of 0.1-20% w/ w cement composition, more preferably 1-10% w/w, and even more preferably 1-5% w/w with reference to the dry weight of any of the described cement compositions in order to facilitate hardening of the cement:water slurry.

In a preferred practice of this invention the hardening accelerator is either NaNO₃, KNO₃, Na₂SO₄, Na₂HPO₄, NaH₂PO₄, K₂HPO₄, KH₂PO₄, MgCl₂ or CaCl₂, which is added in concentrations of 0.5-2% w/ dry weight of the functionalized cement composition.

Pozzolans are organic or inorganic cement fillers, which are not regarded as hydraulic components of cement compositions *per se*. In a preferred practice of the invention pozzolans are inorganic fillers such as fly ash from industrial power plants, petroleum refineries or any other industrial energy production process resulting in fly ash production.

In a preferred embodiment of this invention fly ash (i.e. biogenic fly ash) is used from biomass (i.e. lignin residue) burning activities, which are standard practice for on site-energy generation in biorefinery settings (Bioresources (2007), 2, pp. 707-38). This fly ash is generated by an CO₂ neutral process and therefore adds to the GHG footprint of the cement production process described herein. This biogenic fly ash acts as a nucleation agent for crystallization processing during the cement curing and setting processes. To reduce crystallization and curing times during cement manufacture biogenic fly ash is added at concentrations between 0-50% w/ dry weight of the plain cement composition, more preferably to 10-40% w/ dry weight of the plain cement composition and even more preferably 25-35% w/ dry weight of the plain cement composition. The addition of these pozzolans will reduce the cement curing time 0.1-10 fold compared to the plain cement composition without addition of filler materials.

In yet another preferred embodiment of this invention porrolans may either be high alumina slags, kiln dust, blast furnance slags or bentonite (i.e. Montmorillonite) type Smectite Clay minerals (http://www.epa.gov/osw/nonhaz/define/pdfs/foundry-sands.pdf). In a preferred embodiment of this invention these non-biological additives may be added at concentration between 0-50% w/w, more preferably 10-20% w/w and even more preferably 12-18% w/w of the dry CO₂ absorbing cement composition.

In the following non limiting examples illustrate how the invention may be put in practice.

### Examples

### Example 1 (Sourcing and compositional analysis of cement building blocks)

**Serpentine raw material:** Serpentine rock was sourced at a road works site in Punta Cana, Dominican Republic. The classification of the utilized rock was carried out according to literature precedence (Nonuex J Pacn, LI .(1968) CHEMICAL DIFFERENCES AMONG THE SERPENTIN POLYMORPHS", THE AMERICAN MINERALOGIST, 53, pp. 201-215). The rock was a brown- green translucent mass with an amorphous, platy morphology, which was intermingled with grains of feldspar and biotite. Based on coloration and morphology, the rock was classed into the Lizardite family (General formula: Mg₃Si₂O₅(OH)₄, Elemental Mass distribution: Mg: 26.31 % w/w, Si: 20.27 % w/w, H: 1.45 % w/w, O: 51.96 %w/w) of Serpentine. Lizardite pseudomorphously replaces olivine (http://webmineral.com/data/Lizardite.shtml) and is therefore particularly suitable for CO₂ absorbing cement compositions due to its high magnesia content. Prior to further use serpentine rock was ground to a fine powder, with a particle size smaller than 0,1mm, using a conventional hammer mill, The resulting rock power had a white-grey appearance.

CO₂: Carbon dioxide was obtained from a local beer brewing company in Cologne, Germany. The gas was directly sourced from the beer fermentation vat and pumped (Flow rate: 12 l/min) over 100kg of a pearled molecular sieve (3A zeolite, Sigma, Germany; Kh. Mohamadbeigy , Kh.Forsat, R.Binesh (2007) EXPERIMENTAL STUDYING ON GAS DEWATERING BY MOLECULAR SIEVE ,Petroleum & Coal 49 (1), pp. 41-45) for removal of residual water s(steam). The de-watered gas was then compressed (300 bar) into 18 l pressure cylinders commonly used for scuba diving operations. The compressed gas was used for carbonation of cement compositions.

Lignin residue production: Wheat straw was sourced at a local farm near Bensberg, Germany. The material was ground to particles smaller than 1cm using a combination of hammer and ball milling. Wheat straw (400g), was first subjected to hydrothermal steam pretreatment (165°C, 15min.) in a pressure vessel. The resulting slurry (m= 1578 g, V= 1643ml) was adjusted to pH 5, with two volumes of potassium phosphate buffer (200mM K-P, pH 5). The resulting slurry was hydrolysed by addition of 4% w/w cellulase enzyme (Cellic CTec, Novozymes, Denmark)/w pretreated straw and incubation at 45°C for 72h. After this incubation period, the slurry was centrifuged at 20.000g for 15min. The sugar rich supernatant was discarded, while the remaining solid residue (m= 320g) was washed twice with one volume of distilled water, centrifuged and dried in an oven at 67°C for 24h. The dried solid was further milled with a knife mill (GRINDOMIX GM 200, Retsch, Germany ) to a particle size smaller than 300µm. The chemical composition of the resulting deep brown powder was analyzed according to established procedures (A. Sluiter, B. Hames, R. Ruiz, C. Scarlata, J. Sluiter, D. Templeton, and D. Crocker (2008) Determination of Structural Carbohydrates and Lignin in Biomass Laboratory Analytical Procedure, http://www.nrel.gov/biomass/pdfs/42618.pdf). The dry mass content of the solid residue was determined with an IR-balance (Mettler Toledo, Germany). According to the applied procedures the lignin rich residue consisted of 67% Lignin w/w d.s. residue, 15% Cellulose w/w d.s. residue, 6% w/w residual water and 12% w/w that could be attributed to inorganic salts. This material was used without further treatment for modification of cements.

**Degumming residue**: Raw degumming residue was sourced from a conventional biodiesel plant in northern Germany. Degumming of natural oils (soy and rapeseed mix) was carried using cyclic water washes. The degumming residue had a white and oily appearance with no defined grains. The lipid composition was determined according to (G.R. LIST, T.L. MOUNTS, and A.J. HEAKIN, (1978) Steam-Refined Soybean Oil, J.Am.Oil.Chem.Soc.. 55(2),pp. 280-284), protein content was estimated by the Kjeldahl methodology (Lynch JM, Barbano DM. (1999) Kjeldahl nitrogen analysis as a reference method for protein determination in dairy products , J. AOAC Int., 82(6), pp. 1389-98), while the water content was estimated using an IR-Balance (Mettler-Toledo, Germany). The water content of the degumming residue was determined at 35% w/w. The main chemical components of the solid fraction were 56% w/w phospholipids, 6% protein w/w d.s. degumming residue, 23% saponified fatty acids w/w d.s. degumming residue, 4% inorganic salts w/w d.s. degumming residue. The degumming residue was used as received for functionalization of cement compositions.

**Solid biogas digestate:** Solid biogas residues, were sourced at a local biogas fermentation unit utilizing a 50 (com) : 50 (grass silage) % w/w feed material. The resulting solid residues obtained after the anaerobic fermentation phase are rich in Cellulose, The compositional analysis was carried out as described for lignin residues, while the water content was estimated according to the Karl-Fisher methodology.

The amount of cell residue was determined using the absorbance reading at 600nm. The water content of the biogas solid fraction was estimated at 63% w/w. The main solid components were cellulose 56% w/w. 32% lignin, 7% w/w cell residues and 5% w/w inorganic salts. The biogas digestate was used as received.

### Example 2 (Plain cement composition)

Natural serpentine was activated in an oven at 750 °C for 30 min. After cooling down the serpentine was grounded to particle sizes below d⁵⁰ = 70 µm using a hammer mill.

To 500 g water, 500 g finely grounded activated serpentine was added under kneading at room temperature. The slurry was sparged (Flow: 5 l/min) with CO₂ for 20min. under pressure (1,3 bar) to initiate the carbonation process. For an equal distribution of the gas within the cementous slurry, the gas outlet was divided into four tubing outlet (diameter: 2cm) stations that were placed at equal distances in the 10l reaction vessel. After 30 min kneading time the cement compositions were casted into a casting box. Curing of the plain cement composition was carried out at room temperature. The settling time and air retention was measured using a modified procedure according established methods (EN 196/3; DIN 1164 -1168; ASTM C, 191, ASTM C185 - 08). The compressive strength was determined after 7 days using a modified procedure according ISO 4012.

### Example 3 (Biomass functionalized cement compositions)

Natural serpentine was activated in an oven at 750 °C for 30 min. After cooling down the serpentine was grounded to particle sizes below d⁵⁰ = 70 µm using a hammer mill.

To 500 g water and 0.5-5% w/w biogenic modifier (see table 1), 500 g finely grounded activated serpentine was added under kneading at room temperature, The slurry was sparged (Flow: 5 l/min) with CO₂ under pressure (1,3 bar) for 20 min. To initiate the carbonation process. For an equal distribution of the gas within the cementous slurry, the gas outlet was divided into four tubing outlet (diameter: 2cm) stations that were placed at equal distances in the 10l reaction vessel. After 30 min kneading time the cement compositions were casted into a casting box. Curing of the modified cement composition was carried out at room temperature. The settling time and air retention was measured using a modified procedure according established methods (EN 196/3; DIN 1164 -1168; ASTM C, 191, ASTM C185 - 08). The compressive strength was determined after 7 days using a modified procedure according ISO 4012. The comparative results are indicated in table 1.

### Figure legends

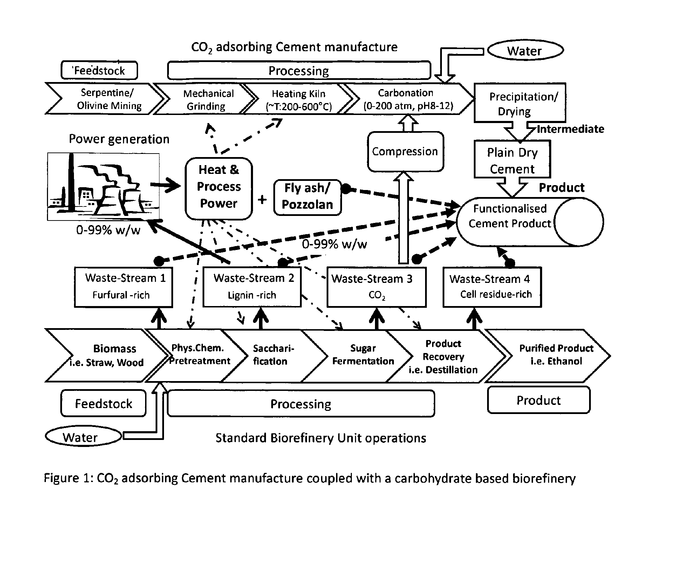

**Figure 1** illustrates a process for the production of functionalized CO₂ absorbing cement composition based on the synergies between cement manufacture and processes used for refining of lignocellulosic (or alternative) biomass into commodity Thin (solid) black arrows, indicate outlets of waste or low value co-product side streams resulting from biorefinery unit operations, while think (solid) blue arrows indicate feedstock, waste or intermediate product input or transfer from a particular unit operation. Green (dashed) arrows show the utilization of biorefining waste streams for functionalizing cement compositions. Red (dot-dashed) arrows show utilization of process energy, which can be produced by utilizing a 0-99 mass% proportion of the lignin rich waste streams for biorefinery coupled power generation. Equivalent processes can be envisioned with any other biorefinery concept.

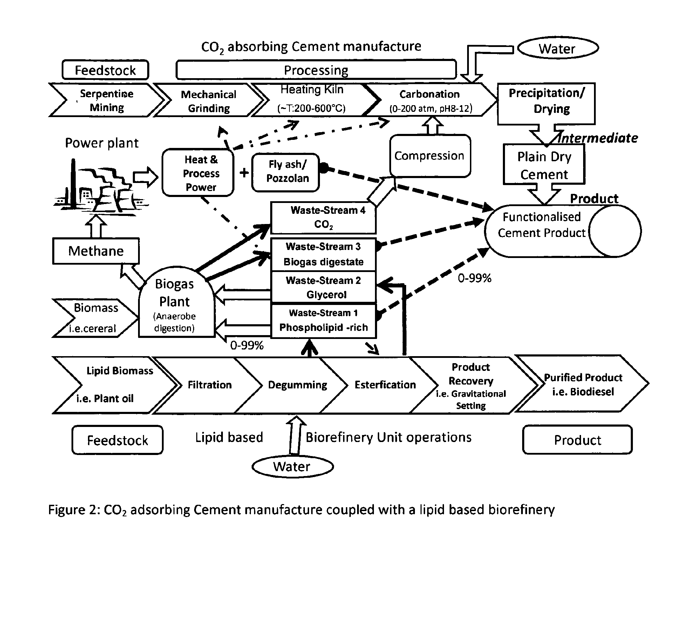

**Figure 2** illutrates a process for the production of functionalized CO₂ absorbing cement composition based on the synergies between cement manufacture and lipid based biomass transformation processes into commodity products (i.e. biodiesel). Thin (solid) black arrows, show waste or low value co-product side streams resulting from biorefinery unit operations, while think (solid) blue arrows indicate waste, feedstock or intermediate product input or transfer from a unit operation. Green (dashed) arrows show the utilization of biorefining waste streams for functionalizing cement compositions. Coupling biorefineries with biogas production is a methodology to valorize waste streams for power generation (http://kchbi.chtf.stuba.sk/cevoze/doc/pod9/Biodiesel%20by-products%20as%20potentiat%20substrates%20for%20biogas%20production.pdf). In the example biorefinery the phospholipid rich waste resulting from Degumming operations of lipids can be fed into a coupled biogas plant, which is co-fed with additional biomass, such as cereals, animal excrement, com, grass silage or any other common biogas feestock. Red (dot-dashed) arrows show utilization of process energy, which can be produced by utilizing a 0-99 mass % of the phospholipid rich waste streams for power generation. Alternatively phospholipid waste streams are utilized at 0-99 mass% in cement production.

**Table 1**: Physical characteristics of cement compositions

**Tables**

**Table1:**

| Experiment | Additive | Mass % w/w | Air entrainment % v/v | Settling time Ratio (modified cement/plain cement) | Compressive Strength Ratio (modified cement/plain cement) |
|---|---|---|---|---|---|
| 1 | None | 0 | 2,7 | 1 | 1 |
| 2 | Degumming residue | 1,5 | 2,1 | 1,2 | 1.1 |
| 3 | Degumming residue | 2.5 | 2,8 | 2,7 | 1.3 |
| 4 | Biogas digestate | 1,5 | 3,2 | 3.1 | 1.2 |
| 5 | Biogas digestate | 3 | 4.8 | 3.2 | 1.7 |
| 6 | lignin residue | 1 | 4,3 | 2.7 | 1.2 |
| 7 | Lignin residue | 5 | 5.7 | 6.3 | 2.4 |

## Claims

1. A method for the production of cement utilising by-products generated by a biorefinery unit comprising the following steps
Step 1: Mechanical grinding of a feedstock comprising one or more CO₂ sequestering compounds;
Step 2: Heating the ground feed stock resulting from step 1 to a temperature of 200 to 600°C
Step 3: Carbonation of the material resulting from step 2 under addition of gaseous CO₂
Step 4: Drying of the mineral carbonates resulting from step 3
wherein
the energy used for step 1 and/or the heat used for step 2 is provided by the biorefinery unit or by a power plant utilizing a product provided by the biorefinery unit and/or
wherein the CO2 used for step 3 is provided by the biorefinery unit.

2. A method according to claim 1 **characterized in that** the one ore more CO₂ sequestering compounds are selected from the group of serpentine, olivine, brucite, pyroxene and magnesiumoxide.

3. A method according any one of the preceeding claims **characterized in that** the CO₂ used for step 3 is a result of a fermentative process selected preferably anaerobic fermentation.

4. A method according any one of the preceeding claims **characterized in that** the method further comprises an additional step 5 Functionalizing the dry plain cement resulting from step 4 by addition of one or more biological modifiers selected from the group of lignin, furfural, cellulose, phospholipids and microbial cell residues.

5. A method according to claim 4 **characterized in that** the biological modifiers are provided by the biorefinery unit.

6. A method according to claim 5 **characterized in that** the biological modifiers provided in form of at least one waste stream of the biorefinery unit.

7. A method according to claim 6 **characterized in that** the waste stream of the biorefinery unit is not modified by additional processes.

8. A method according to claim 6 **characterized in that** waste stream of the biorefinery unit is only modified by dewatering.

9. A method according to any one of claims 6 to 8 **characterized in that** the waste stream comprises water in an amount of 0-80% w/w.

10. A method according to any one of claims 6 to 9 **characterized in that** the unmodified waste stream is a lignin rich residue comprising lignin in an amount of 1-100% w/w. Carbohydrates in an amount of 0-50% w/w, water in an amount of 0-80 % w/w, soluble phenolics in an amount of 0-30 % w/w and wax in an amount of 0-14 % w/w

11. A method according to any one of claims 6 to 9 **characterized in that** the unmodified waste stream is a furfural rich residue comprising pentose sugars in an amount of 1-70% w/w, hexose sugars in an amount of 0-20% w/w, furfural in an amount of 0-80 % w/w, 5-hydromethylfurfural in an amount of 0-50 % w/w, phenolics in an amount of 0-30% w/w and water in an amount of 0-80 % w/w

12. A method according to any one of claims 6 to 9 **characterized in that** the unmodified waste stream is a phosphorous rich residue comprising phospholipids in an amount of 10-99% w/w, lipids in an amount of 0-30% w/w, carbohydrates in an amount of 0-99 % w/w, proteins in an amount of 0-50 % w/w and water in an amount of 0-80 % w/w

13. A method according to any one of claims 6 to 9 **characterized in that** the unmodified waste stream is a solid biogas digestate comprising lignin in an amount of 10-99% w/w, microbial cell residues in an amount of 0-50% w/w, carbohydrates in an amount of 0-90 % w/w and water in an amount of 0-90 °/o w/w.

14. A method according to to any one of claims 6 to 9 **characterized in that** the unmodified waste stream is a cell rich residues comprising microbial cell residues in an amount of 1-99% w/w, carbohydrates in an amount of 0-40 % w/w and water in an amount of 0-90 % w/w.

15. A method according to any one of claims 6 to 9 **characterized in that** the biological modifiers provided in form of at least one waste stream of the biorefinery unit which is either untreated or only modified by dewatering.

16. A functionalized cement product comprising SiO₂, MgCO₃, a residue selected from the group of serpentine, olivine, brucite, pyroxene and magnesiumoxide and a biological modifier selected from the group of lignin, furfural, cellulose, phospholipids and microbial cell residues or any mixture thereof.

17. A functionalized cement product according to claim 16 also comprising one or more components selected from the group of fly ash in an amount of 1-20 % w/w, aluminium slags, furnace slags, w/w sand in an amount of 1-40%, natural or artificial rubbeor any polymeric isoprene, wood resin in an amount of 1-30% w/w, filter residues from edible oil processing, plant waxes, oil seed press cake or fractions thereof, or chemically modified celluloses.
